# EUROPEAN PATENT APPLICATION

(11) **EP 0 957 561 A2**
(43) Date of publication of application: **17.11.1999**
(21) Application number: 99302825.7
(22) Date of filing: 12.04.1999
(51) Int. Cl.: H02K 1/28

(54) **Rotor cores for electrical rotating machines**

(30) Priority: 14.04.1998 GB 9807691
(71) Applicant: Alstom UK Limited, Rugby, Warwickshire CV21 1TB (GB)
(72) Inventor: Regan, Roger H., West Haddon, Northamptonshire NN6 7PD (GB); Lewis, Clive D., Stockton, Rugby CV23 8LD (GB); Lomax, Ian D., Lutterworth, Leicestershire LE17 4RN (GB)
(74) Representative: Dargavel, Laurence Peter

(57) **Abstract**

A rotor core (C) for a rotating electrical machine, laminations (10) for such a rotor core, and a method of assembling the rotor core onto a rotatable shaft (60) of the rotating electrical machine. The rotor core (C) comprises a pack of laminations, and patches (12) of sheet or sprayed material are provided on at least one side of a few laminations. The laminations having the patches are regularly spaced through the pack to define blocks (31, 38) of laminations. The patches (12) have a coefficient of friction such that said at least one lamination and an adjacent lamination are able to slide relatively to one another on slip planes S (Figure 7, exaggerated) when the pack of laminations is mounted on the shaft. This allows movement of one to several microns between adjacent blocks (31, 38) of the laminations, so enabling the rotor core to conform to a slight permanent mis-shape of the shaft (60), or alternatively allowing the shaft to return to a normal shape during overspeed testing if it was slightly bent during manufacture.

## Description

The present invention is concerned with rotor cores for electrical rotating machines. The term electrical rotating machine is intended to cover any form of apparatus having a rotating member which generates, converts, transforms or modifies electric power; inter alia such machines will comprise motors, generators, synchronous condensers, synchronous converters, rotating amplifiers, phase modifiers and combinations of these in any one machine.

Such a machine normally incorporates at least one rotor rotatable with a rotatable shaft, and the rotor usually comprises a metal core on which electrical conductors in one form or another are mounted; inter alia the core may be formed with slots for wound coils or for bars.

It is known to construct the rotor core of an electrical rotating machine from a stack of laminations pressed together and shrunk onto a rotatable shaft. The laminations are typically formed from sheets of electrical grade steel with the laminations having an appropriate insulating substance e.g. a varnish, resin or other appropriate (organic or inorganic) compound applied thereto. In an operation to assemble such a rotor core the laminations are typically placed on a mandrel, pressed together at a suitably high pressure (say 200 psi) and then heated up and shrunk directly onto a pre-machined shaft.

When the core pack thus formed is shrunk onto the shaft, and depending on the relative lateral stiffnesses of the shaft and core there is a possibility that the core pack will bend the shaft. In the past, this has required remedial action to the shaft-rotor assembly after fitting the laminations which remedial action may, for example, involve re-grinding of the bearing journals of the shaft and/or of the non-contacting proximity probe tracks. (Such tracks are provided on the shaft e.g. by fine grinding and subsequent burnishing, and are associated with non-contacting proximity probes - these contain a small coil which induces current in the probe track surface of the rotating shaft and detects a back emf in the coil due to this current. The probe is calibrated to give the distance between the shaft and the probe and is able to detect variations in the distance caused by transverse movement of the shaft).

It has also been found that the shape of the shaft rotor assembly may vary in service as the core pressure relaxes over time.

The aim of the invention is to provide a rotor core wherein, during assembly of the laminations on the shaft and subsequently in service, movement is possible between adjacent laminations or more particularly between adjacent stacks of laminations so that the core pack can conform to the natural shape of the shaft.

According to one aspect of the invention there is provided a method of assembling a rotor core onto a rotatable shaft of a rotating electrical machine, said rotor core comprising a plurality of laminations, which method includes the step of providing at least one side of at least one of said laminations with a formation which has a coefficient of friction such that said at least one lamination and a lamination adjacent thereto are able to slide relatively to one another when the laminations are mounted on the shaft.

According to a further aspect of the invention there is provided a method of assembling a rotor core of a rotating electrical machine onto a rotatable shaft, said rotor core comprising a plurality of laminations, which method includes the step of providing at least one side of at least one of the laminations with a formation which allows the at least one lamination and a lamination which is adjacent thereto to slide relatively to one another when the laminations are mounted on the shaft.

In a method as defined above the formation is preferably provided on a plurality of first said laminations and when the laminations are assembled on the shaft, each of those first laminations are spaced from the nearest first lamination or laminations by one or more second said laminations on which the formation is not provided. Each said first lamination may be spaced from the closest first lamination or laminations by a distance constituting a percentage of the diameter of the shaft the percentage may be in the range 30-90% of the diameter of the shaft, and preferably the percentage is of the order of 60% of the diameter of the shaft.

Said step of providing a formation may comprise the application of a material, e.g. by spraying, to the surface of the said side of the one lamination or laminations, or may comprise the application of at least one sheet of material to the one lamination or laminations.

The material preferably comprises a low-friction material, such as fully or partially halogenated hydrocarbon, e.g. polytetrafluoroethylene, or at least a material having a lower coefficient of friction than the insulating substances normally applied to the laminations before assembly on a mandrel.

The method may further include the steps of holding all the laminations of the core in juxtaposition, pressing them, heating and then shrinking them onto the shaft.

In a further aspect the invention provides a rotor core for an electrical rotating machine said rotor core comprising a plurality of laminations at least one of which has on at least one side thereof a formation, which formation allows the at least one lamination and a lamination which is adjacent thereto to slide relatively to one another.

In a yet further aspect the invention provides a rotor core for an electrical rotating machine said rotor core comprising a plurality of laminations at least one of which has on at least one side thereof a formation which has a coefficient of friction such that said at least one lamination and a lamination which is adjacent thereto are able to slide relative to one another.

The formation may be provided on a plurality of first laminations each of which is spaced from the nearest first lamination by one or more second laminations on which the formation is not provided and each said first lamination may be spaced from the closest first lamination or laminations by a distance constituting a percentage of the diameter of the shaft, e.g. in the range 30-90% of the diameter of the shaft. Preferably the percentage is of the order of 60% of the diameter of the shaft.

The formation may be provided by a material comprising a fully or partially halogenated hydrocarbon e.g. polytetrafluoroethylene.

In a further aspect the invention provides a lamination for a rotor core of an electrical machine said lamination having a formation on at least one side thereof which allows the lamination and a lamination which is adjacent thereto, in use, to slide relatively to one another.

In a yet further aspect the invention provides a lamination for a rotor core of an electrical machine which lamination has on at least one side thereof a formation which has a coefficient of friction such that said lamination and a lamination which is adjacent thereto, in use, are able to slide relative to one another.

The formation may be provided by a material applied, e.g. by spraying, to the lamination, or may be in the form of at least one sheet of material applied to the at least one side; the material may comprise a fully or partially halogenated hydrocarbon, e.g. polytetrafluoroethylene.

It has been observed that the invention can substantially reduce the vibration of a rotor core, in use.

Embodiments of the invention are described by way of example only with reference to the accompanying drawings in which:
Figure 1 is a plan view of a lamination for use in a synchronous electrical machine;
Figure 2 is a plan view of a lamination for use in an induction machine;
Figure 3 shows the lamination of Figure 1 with sheets of material applied thereto in the form of patches;
Figure 4 shows the lamination of Figure 2 with an annular sheet of material applied thereto;
Figure 5 is a plan view of a stack of laminations being assembled in a press prior to being shrunk onto a shaft;
Figure 6 is a sectional view of a shaft with a stack of laminations shrunk thereonto and with a diagrammatic illustration of slip planes and the directions of slip associated with the utilisation of the invention; and
Figure 7 indicates diagrammatically the bending of such a shaft and the associated movement of the laminations, the degree of such bending and associated movements being shown greatly exaggerated.

The invention is applicable to any shape or form of laminations which can be utilised to form a rotor core.

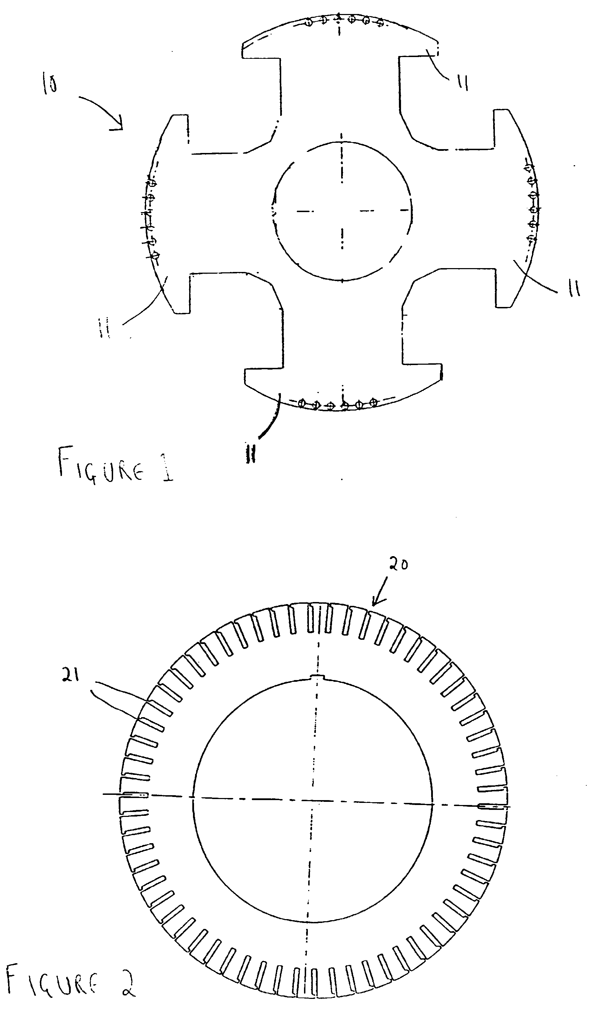

By way of example in Figure 1 is shown a lamination 10 with four salient poles 11; such a lamination is generally referred to as cruciform and typically is utilised in forming a pack for use in a synchronous machine e.g. a motor or generator, conductor coils being wound around the arms of the cruciform.

In Figure 2 is shown a ring-formed lamination 20 which typically is utilised in forming a pack for use in the rotor of an induction machine, specifically a squirrel-cage induction motor. The outer circumference of the lamination 20 is formed with slots 21 for receiving the rotor bars.

Figure 5 illustrates the production of a core pack C. Laminations 30 of any convenient form (e.g. as illustrated in Figure 1 or 2) are mounted on a central axially extending mandrel (not shown) and are pressed together and held under pressure between clamp plates 41, 42 having axially extending members, e.g. studs or bolts 51, 52, 53 therebetween which are utilised (as by the tightening of associated nuts 54-59) to move the clamp plates 41, 42 relatively towards one another. Each axially extending member 51-53 may be provided outside the circumferences of the laminations or may extend (with a suitable clearance) through apertures in the laminations - in the latter case such member may become an integral part of the core pack C when such is mounted on a shaft.

In accordance with the invention one or more of the laminations 30 is provided on at least one side thereof with a formation which allows the lamination and a lamination adjacent thereto to slide relatively to one another when the laminations are mounted on a shaft: the formation has a coefficient of friction such that this relative sliding can occur during both assembly and use of the rotor core C to allow the core pack to conform to the shape of the shaft.

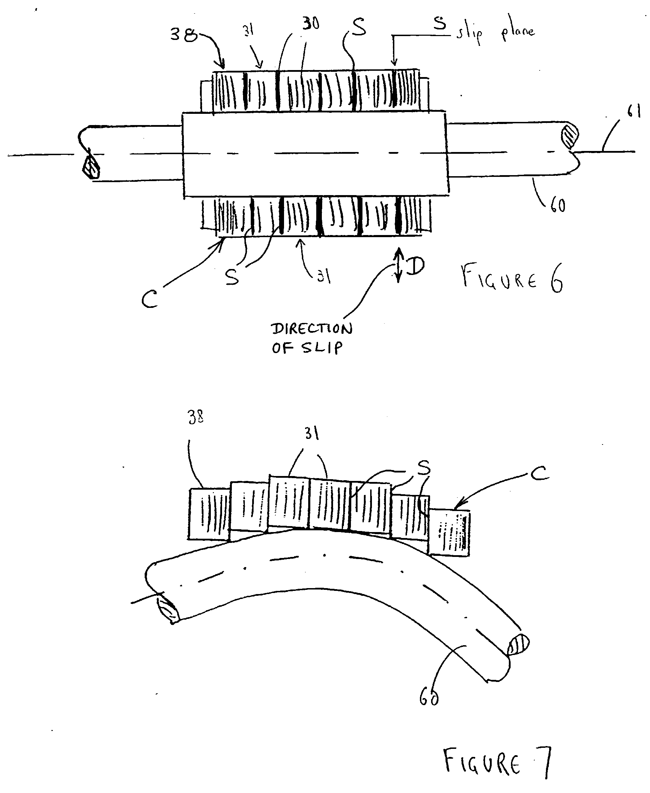

The rotor core C thus formed is heated and shrunk onto the shaft 60 (see Figure 6).

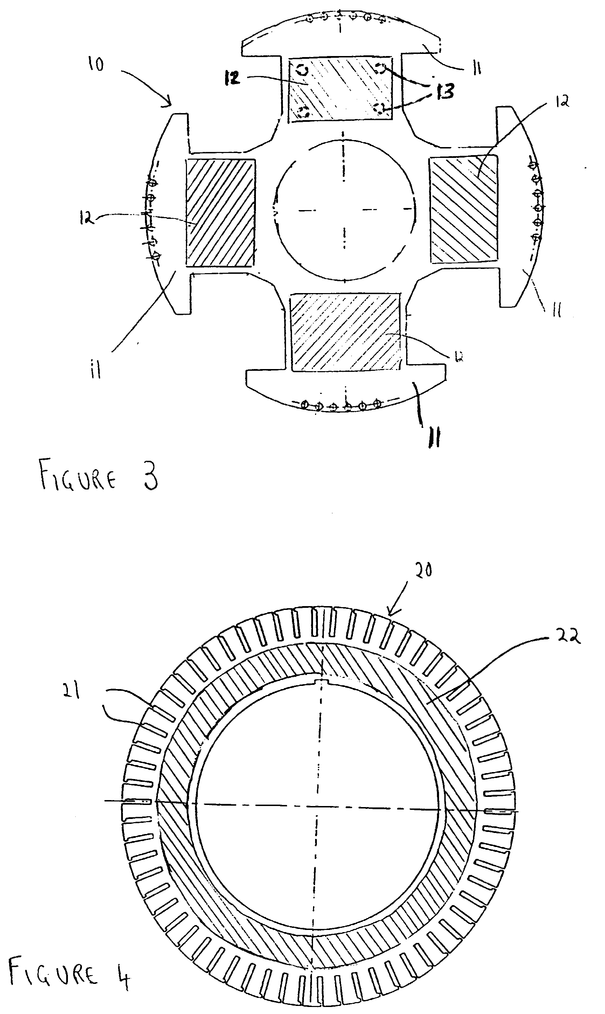

In a preferred arrangement the aforesaid formation is in the form of a sheet or sheets of low-friction material of a suitable shape formed separately from the lamination and placed between adjacent laminations. Such shape need only approximate the shape of the lamination or indeed may extend over only a limited area or areas of the face of the lamination. For example in the lamination of Figure 1 each pole 11 may have a separate piece of material 12 or a 'patch' applied thereto or associated therewith. As shown in Figure 3 each such patch is of generally rectangular shape but other shapes are possible. Where studs are to extend through the formations 12 when the laminations are mounted on the shaft then appropriately positioned apertures 13 are provided in the patches 12 - see the upper patch 12 on Figure 3.

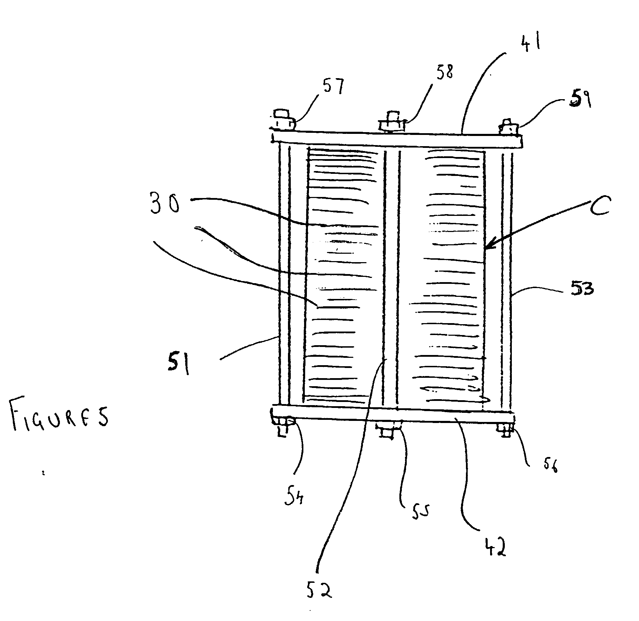

In the case of a lamination in Figure 2 and as shown in Figure 4 the sheet 22 may have a simple annular shape, without the necessity of having equivalent slots in the sheet. Thus the sheet will have an outer circumference with a diameter less than the diameter of the inner parts of slots 21 and an inner circumference with a diameter greater than the diameter of the inner circumference of the lamination. The sheet may be formed of a fully or partially halogenated hydrocarbon e.g. a fluorocarbon particularly PTFE.

In a further arrangement the formation may be formed by applying a low-friction material such as a fully or partially halogenated hydrocarbon e.g. a fluorocarbon, particularly PTFE, directly to an area or areas of the lamination, e.g. by spraying.

The formation as described above may be applied to both sides of a lamination and/or may be applied to any of the laminations in the core pack. However, it is particularly envisaged and as seen in Figures 6, 7 that the formation is applied to one side of only certain of the laminations which are spaced one from another so that the lamination pack is divided into sections 31, 38; each section 31 is defined between two adjacent laminations having the formation and, at the two pack ends, each section 38 is defined between the end of the pack and the closest lamination having the formation. Each core section 31, 38 has an axial extent corresponding to a percentage of the diameter of the shaft 60, such percentage is preferably in the range 30-90% of the diameter of the shaft and more especially of the order of 60%.

As seen in Figures 6 and 7, each of those laminations provided with the material abuts against respective adjacent laminations along a slip plane S wherein sliding or slipping movement between them is possible, effectively allowing movement between sections of the rotor core C in a plane extending in directions D substantially normal to the longitudinal axis 61 of the shaft 60. It is to be understood that the amount of such movement will generally not exceed more than a few microns and indeed may be less than 1 micron.

As the sliding or slipping movement occurs the core pack will conform to the natural (machined) shape of the shaft. Should the shaft have been bent as the core pack is assembled thereon the movement along the slip plane(s) will allow the shaft to return to its machined state. In this regard it is envisaged that by rotating the shaft above its normal maximum speed, which will normally be done as a proving check, the slipping movement will then more readily occur to allow the shaft to return to its normal shape.

By use of the arrangements as described above vibration of the rotor core C in use can be substantially reduced.

## Claims

1. A method of assembling a rotor core onto a rotatable shaft of a rotating electrical machine, said rotor core comprising a plurality of laminations, which method includes the step of providing at least one side of at least one of said laminations with a formation which has a coefficient of fiction such that said at least one lamination and a lamination adjacent thereto are able to slide relatively to one another when the laminations are mounted on the shaft.

2. A method of assembling a rotor core of a rotating electrical machine onto a rotatable shaft, said rotor core comprising a plurality of laminations, which method includes the step of providing at least one side of at least one of the laminations with a formation which allows the at least one lamination and a lamination which is adjacent thereto to slide relatively to one another when the laminations are mounted on the shaft.

3. A method as claimed in Claim 1 or Claim 2 wherein the formation is provided on a plurality of first said laminations and wherein, when the laminations are assembled on the shaft, each of those first laminations are spaced from the nearest first lamination or laminations by one or more second said laminations on which the formation is not provided.

4. A method as claimed in Claim 3 wherein each said first lamination is spaced from the closest first lamination or laminations by a distance constituting a percentage of the diameter of the shaft.

5. A method as claimed in Claim 4 wherein the percentage is in the range 30-90% of the diameter of the shaft.

6. A method as claimed in Claim 5 wherein the percentage is of the order of 60% of the diameter of the shaft.

7. A method as claimed in any preceding claim wherein said step of providing a formation comprises the application of a material, e.g. by spraying, to the surface of the said side of the one lamination or laminations.

8. A method as claimed in any one of Claims 1-6 wherein said step of providing said formation comprises the application of at least one sheet of material to the one lamination or laminations.

9. A method as claimed in Claims 7 or Claim 8 wherein the material comprises a fully or partially halogenated hydrocarbon.

10. A method as claimed in any one of Claims 7-9 wherein the material comprises polytetrafluoroethylene.

11. A method as claimed in any preceding claim which includes the steps of holding all the laminations of the core in juxtaposition, pressing them, heating and then shrinking them onto the shaft.

12. A rotor core and shaft when assembled by a method according to any preceding claim.

13. A rotor core for an electrical rotating machine said rotor core comprising a plurality of laminations at least one of which has on at least one side thereof a formation, which formation allows the at least one lamination and a lamination which is adjacent thereto to slide relatively to one another.

14. A rotor core for an electrical rotating machine said rotor core comprising a plurality of laminations at least one of which has on at least one side thereof a formation which has a coefficient of friction such that said at least one lamination and a lamination which is adjacent thereto are able to slide relative to one another.

15. A rotor core as claimed in Claim 13 or Claim 14 wherein the formation is provided on a plurality of first laminations each of which is spaced from the nearest first lamination by one or more second laminations on which the formation is not provided.

16. A rotor core as claimed in Claim 15 wherein each said first lamination is spaced from the closest first lamination or laminations by a distance constituting a percentage of the diameter of the shaft.

17. A rotor core as claimed in Claim 16 wherein the percentage is in the range 30-90% of the diameter of the shaft.

18. A rotor core as claimed in Claim 17 wherein the percentage is of the order of 60% of the diameter of the shaft.

19. A rotor core as claimed in any one of claims 13-18 wherein the formation is provided by a material comprising a fully or partially halogenated hydrocarbon.

20. A rotor core as claimed in any one of Claims 13-19 wherein the material comprises polytetrafluoroethylene.

21. A lamination for a rotor core of an electrical machine said lamination having a formation on at least one side thereof which allows the lamination and a lamination which is adjacent thereto, in use, to slide relatively to one another.

22. A lamination for a rotor core of an electrical machine which lamination has on at least one side thereof a formation which has a coefficient of friction such that said lamination and a lamination which is adjacent thereto, in use, are able to slide relative to one another.

23. A lamination as claimed in Claim 21 or Claim 22 wherein said formation is provided by a material applied, e.g. by spraying, to the lamination.

24. A lamination as claimed in Claim 21 or Claim 22 wherein the formation is in the form of at least one sheet of material applied to the at least one side.

25. A lamination as claimed in Claim 23 or Claim 24 wherein the material comprises a fully or partially halogenated hydrocarbon.

26. A lamination as claimed in any one of Claims 23-25 wherein said material comprises polytetrafluoroethylene.
